# EUROPEAN PATENT APPLICATION

(11) **EP 4 438 780 A1**
(43) Date of publication of application: **02.10.2024**
(21) Application number: 23165941.8
(22) Date of filing: 31.03.2023
(51) Int. Cl.: D03D 1/00, D03D 13/00, B32B 5/26, B60R 13/02

(54) **TEXTILE FABRIC WEB, METHOD FOR PRODUCING THIS TEXTILE FABRIC WEB, USE OF SUCH A TEXTILE FABRIC WEB, TRIM PART OF A VEHICLE COMPRISING SUCH A TEXTILE FABRIC WEB AND VEHICLE HAVING THIS KIND OF TRIM PART**

(71) Applicant: Motherson Innovations Company Ltd., London EC2N 2AX (GB)
(72) Inventor: WEINGÄRTNER, Torsten, 79108 Freiburg (DE); WILLAREDT, Bastian, 79312 Emmendingen (DE); SEHN, Fabian, 79100 Freiburg (DE)
(74) Representative: Westphal, Mussgnug & Partner Patentanwälte mbB

(57) **Abstract**

The present disclosure relates to a textile fabric web (10) comprising a knitted or woven or braided fabric structure (12), and a plurality of openings (16) or material accumulations (19) that are integrated into the fabric structure (12) and positioned in repeating spacing (S). Moreover, the present disclosure is drawn to a method for producing textile fabric web (10), to a use of such a textile fabric web (10), a trim part (32) of a vehicle (34) comprising such a textile fabric web (10) and a vehicle (34) comprising such a trim part (32).

## Description

The present disclosure relates to a textile fabric web. Moreover, the present disclosure is drawn to a method for producing this textile fabric web, to a use of such a textile fabric web, a trim part of a vehicle comprising such a textile fabric web and a vehicle having such a trim part.

Although the exterior design of a modern vehicle is predominant in the differentiation of the vehicles and the vehicle manufacturers, the interior design is becoming increasingly important as a means for said differentiation and brand positioning. One way of such a differentiation in the interior design is to provide interior trim parts with a specific surface. The surfaces may be provided by textile fabric webs which comprise optically recognizable patterns or specific haptic properties. The patterns may create light or depth effects similar to holograms. Depending on the pattern the desired effect is not provided in all areas of the textile fabric web but only inside pattern sections.

The finished textile fabric web is usually rolled up to a reel for storage and transport and cut into sections before further processing. In particular the light or depth effects rely on the exact reproduction of the pattern section and the precise position of the textile fabric web on the trim part of the vehicle. For this purpose, positioning holes are punched into the sections of the textile fabric often just before the application on a carrier layer which may be part of a trim part of a vehicle. The application may be done by press lamination or inside an injection molding machine. However, the position of the holes punched in the section of the textile fabric web may often be insufficiently precise. As mentioned, some effects strongly depend on the exact positioning of the section of the textile fabric web on the carrier layer. Consequently, the desired effects may be diminished or even lost.

It is therefore one task of one embodiment of the present disclosure to present a textile fabric web and a method for producing the same by which the exact positioning of a section of the textile fabric web on a carrier layer can be facilitated. Moreover, it is one task of the present disclosure to present a use of such a textile fabric web, a trim part of a vehicle comprising such a textile fabric web and a vehicle having this kind of trim part.

The task is solved by the features specified in claims 1, 9, 10, 11 and 13. Advantageous embodiments are the subject of the dependent claims.

According to an embodiment of the present disclosure the textile fabric web comprises
- a knitted or woven or braided fabric structure, and
- a plurality of openings or material accumulations integrated into the fabric structure and positioned in repeating spacing.

A central difference between the textile fabric web according to the present disclosure and a textile fabric web known from the prior art is that the openings or material accumulations are already provided when the textile fabric web is produced, for example either by knitting or weaving or braiding. The feature "integrated into the fabric structure" is to be understood accordingly. Holes punched into the textile fabric web after the same is finished are not considered as being integrated into the fabric structure. An additional punching step for the openings can be omitted. Further, not only openings but material accumulations may be provided while only holes can be obtained by punching.

Another aspect is that the position of the openings in case they are produced when the textile fabric is produced is more precise compared to holes punched into the textile fabric web in a later step. The positioning accuracy of a section of the textile fabric web on a carrier layer is concomitantly increased. It is noted that the term "positioned in repeating spacing" does not mean that two adjacent openings always have the same distance, although this is not excluded. This term may also include distances that alternatingly increase and decrease.

In another embodiment a number of the openings or material accumulations define one opening group in which the openings or material accumulations are arranged in a particular array, a plurality of opening groups positioned in repeating spacing relative to each other. For a proper positioning of a section of the fabric at least two, better three or more openings are needed. These openings define an opening group in which the openings may be arranged in an array. Along the textile fabric a plurality of opening groups is positioned in repeating spacing.

According to another embodiment the fabric structure forms a pattern that is repeated in pattern sections, the pattern sections being arranged spaced apart from each other, wherein the opening groups are arranged in the same way within the pattern sections. As mentioned, specific effects of the patterns such as light or depth effects may only occur within a particular pattern section. In this embodiment the opening groups are arranged with reference to the pattern section. Thus, when the section of the textile fabric web is positioned on a carrier layer using the openings it is ensured that the mentioned effects occur.

According to a further embodiment the pattern is irregular within a given pattern section. Irregular patterns may be direction independent or isotropic. It is difficult to identify and delimit the pattern section in which such an irregular pattern is repeated. They may for example be repeated in alternating distances along the axis of the textile fabric web. Searching for and finding the correct position for punching the holes is cumbersome and prone to error. However, as the positioning openings or material accumulations are already integrated when the textile fabric web is produced, this tedious work is superfluous.

According to a further embodiment the fabric structure is woven and can comprise areas with yarns being arranged in at least one of twill weave, plain weave and mock leno weave. These types of weaves are easy to manufacture.

According to a further embodiment the openings or material accumulations are created by arrangement of yarns in at least one of twill weave, plain weave and mock leno weave. These types of weaves allow integration of openings or material accumulations in a simple manner.

In another embodiment the openings or material accumulations have a diameter of between 0,5 mm to 5 mm, in particular 1,5 mm to 3 mm. In a further embodiment the openings or material accumulations have circular shape. It has been found that such dimensions and/or shapes are well-suited for the positioning of the sections of the textile fabric web on a carrier layer without negatively influencing the outer appearance of the textile fabric web. However, the shape of the openings or material accumulations is not restricted to circular cross-sections but may be polygonal, elliptical, point-like or line-like. Especially, the shape of the openings depends on the way the textile fabric is produced, for example in arrangement of yarns in twill weave, plain weave or mock leno weave. Moreover, by using the mentioned dimensions the material accumulations or openings can be located close to the pattern or pattern section without disturbing the same. At the same time inaccuracies caused by stretching or folding of the textile fabric web are reduced the closer the material accumulations or openings are located to the desired pattern section. For this purpose the openings or material accumulations may also be located in protrusions protruding from the desired pattern section.

According to another embodiment the textile fabric web comprises functionalized fibers, in particular at least one of light guide fibers, electrically conductive fibers, and thermally conductive fibers. The exact positioning is one key issue to ensure that the functionalized fibers can execute their function. The openings or material accumulations facilitate the exact positioning also in this embodiment.

Another aspect of the disclosure is directed to a method for producing a textile fabric web according to one of the preceding embodiments, comprising the step of knitting or weaving or braiding
- the fabric structure, and
- the plurality of openings or material accumulations integrated into the fabric structure and positioned in repeating spacing.

The technical effects and advantages as discussed regarding the present textile fabric web equally apply to the method. Briefly, a punching step after the textile fabric web is finished can be omitted. Moreover, the accuracy of the positioning of the openings is increased compared to the punched holes. By punching, no material accumulations can be created. Depending on the application, material accumulations may be better suited for the positioning of a given section of the textile fabric web on the carrier layer than openings. It may be possible to insert a positioning device, for example a pin protruding over the textile fabric web, in the opening to facilitate positioning. As openings may constitute a weak spot within the fabric structure, the use of material accumulations may be appropriate when the textile fabric web is exposed to fairly high loads. In both cases, the positioning may thus be facilitated.

A further aspect of the present disclosure is drawn to the use of the openings or material accumulations as positioning means of a pattern section of a textile fabric according to one of the preceding embodiments for positioning the textile fabric on a trim part of a vehicle. The technical effects and advantages as discussed regarding the present textile fabric web equally apply to the use of the openings or material accumulations.

Another aspect of the present disclosure relates to a trim part of a vehicle, comprising
- a carrier layer and
- a textile fabric web according to one of the embodiments previously described fastened on the carrier layer using the openings or material accumulations.

According to an embodiment, the trim part may comprise a soft layer being arranged between the carrier layer and the textile fabric web. A soft layer may provide for a comfortable feeling when touching the trim part.

Yet another aspect of the present disclosure is drawn to a vehicle comprising a trim part previously presented.

The technical effects and advantages as discussed regarding the present textile fabric web equally apply to the trim part of or for a vehicle and the vehicle itself.

The present disclosure is described in detail with reference to the drawings attached wherein
- Figure 1: is a principle top view on a textile fabric web according to a first embodiment of the present disclosure,
- Figure 2: is a principle top view on a precut of a textile fabric web according to a second embodiment of the present disclosure,
- Figure 3a: is a cross section through a trim part of or for a vehicle according to a first embodiment,
- Figure 3b: is a cross section through a trim part of or for a vehicle according to a second embodiment,
- Figure 4: is a top view on a vehicle comprising a number of trim parts according to the present disclosure, Figures 3 and 4 also being of principle nature,
- Figure 5a: is a schematic view of yarns arranged in twill weave,
- Figure 5b: is a schematic view of yarns arranged in plain weave,
- Figure 5c: is a schematic view of yarns arranged in mock leno weave,
- Figure 6: is a principle top view on a textile fabric web according to a further embodiment of the present disclosure and
- Figure 7: is the top view on the textile fabric web according to figure 6 in which the precuts are schematically added.

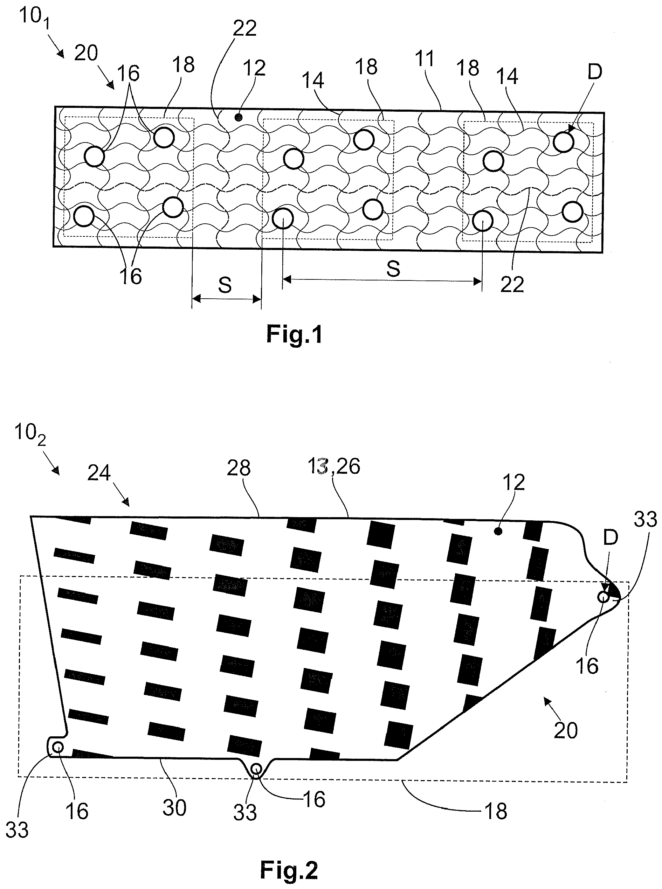

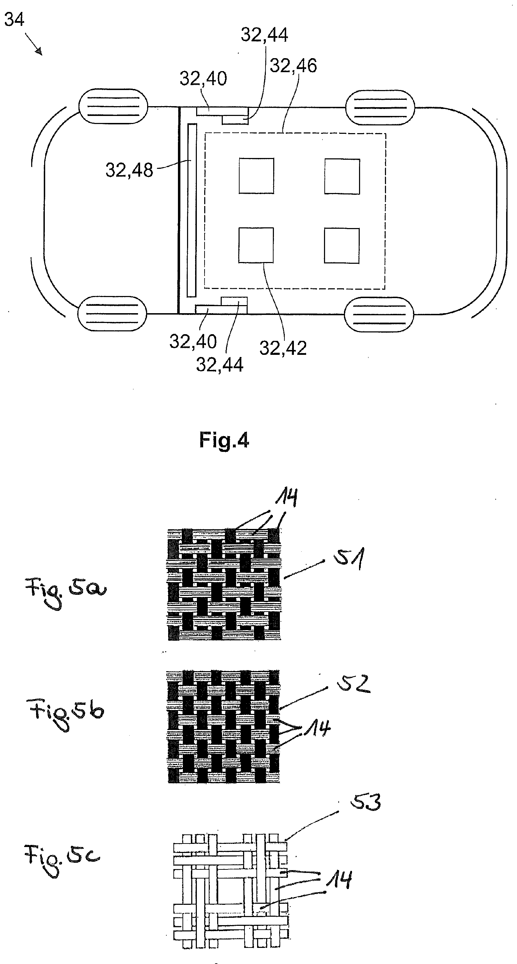

Figure 1 shows a principle top view of a section 11 of a first embodiment of a textile fabric web 10₁ according to the present disclosure. The textile fabric web 10₁ comprises a knitted or woven or braided fabric structure 12 that is formed by a plurality of yarns 14, some of which are exemplarily shown. In case the textile fabric web 10₁ comprises a woven fabric structure 12, the yarns 14 can for example be arranged in twill weave 51 (see figure 5a), plain weave 52 (see figure 5b) or mock leno weave (see figure 5c).

The fabric structure 12 comprises a number of openings 16 which are integral part of the fabric structure 12. The openings 16 may be created by arrangement of yarns 14 in a specific weave, for example in mock leno weave (see figure 5c).

In the first embodiment shown in Figure 1, four openings 16 form an opening group 18. Within this opening group 18 the four openings 16 are arranged in a specific array. Both the openings 16 as such as well as the opening groups 18 are positioned in repeating spacing S relative to each other. In the first embodiment of the textile fabric web 10₁ the spacing S between two adjacent opening groups 18 is constant. However, the spacing S between the opening groups 18 may also alternatingly increase and decrease or change saw-tooth-like. The individual equivalent openings 16 of two adjacent opening groups 18 may also be positioned in repeating spacing S relative to each other.

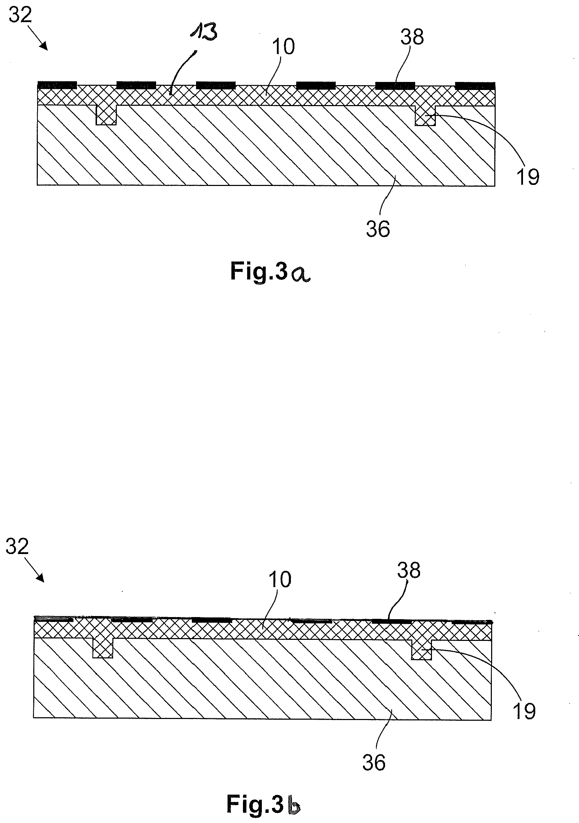

Instead of openings 16, the fabric structure 12 may also comprise material accumulations 19 (see Figure 3). The material accumulations 19 may as well be created by arrangement of yarns 14 in a specific weave. A mixture of material accumulations 19 and openings 16 may also be possible. Further, it is possible to add positioning devices like for example pins in the openings 16 for positioning purposes.

Some of the yarns 14 might be embodied as functionalized fibers 22 that may be light guide fibers, electrically conductive fibers, thermally conductive fibers or the like. The functionalized fibers 22 are used to provide the surface of the textile fabric web 10₁ with specific properties, in particular haptic and optic properties.

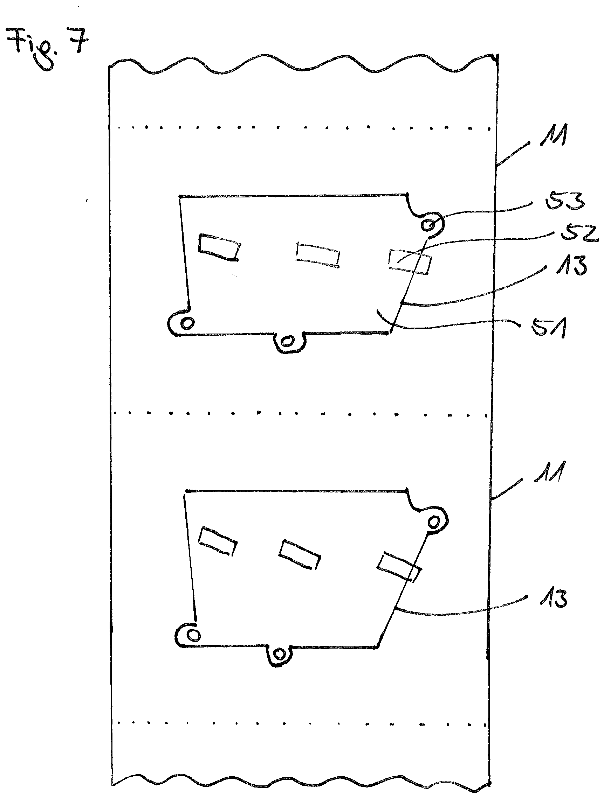

In Figure 2 a precut 13 of a second embodiment of the textile fabric web 10₂ is shown that comprises a pattern 24. The pattern 24 may as well be created by arrangement of yarns 14 in a specific weave, for example in twill weave 51 (see figure 5a) or plain weave 52 (see figure 5b). The pattern 24 is irregular within a given pattern section 26. The pattern section 26 of interest may be significantly smaller than the section 11. The pattern 24 may be direction independent or isotropic. An upper edge 28 and a lower edge 30 of the precut 13 may run parallel or almost parallel to each other. When maintaining the orientation of the upper edge 28 and the lower edge 30, the next precut 13 of the textile fabric web 10₂ with an identical pattern 24 may be located at a significant distance from the precut 13 shown (compare as well figure 7). This precut 13 may be difficult to identify. However, as the openings 16 or material accumulations 19 are an integral part of the fabric structure 12, they can be considered as a part of the pattern 24 or are at least arranged close to the pattern 24 and will be reproduced in the same way as the entire pattern 24. Thus, the openings 16 or material accumulations 19 help identifying pattern sections 26 having the same pattern 24. The openings 16 or material accumulations 19 may act as fiducial markers for a camera system of a cutter. The openings 16 are preferably located at the border of the pattern section 26 of interest. In the second embodiment of the shown textile fabric web 10₂ the openings 16 are located in protrusions 33 of the precut 13 where the openings 16 on the one hand do not disturb the pattern 24 but on the other hand are still located close to the desired pattern section 26 to ensure proper stretching of the textile fabric web 10₂.

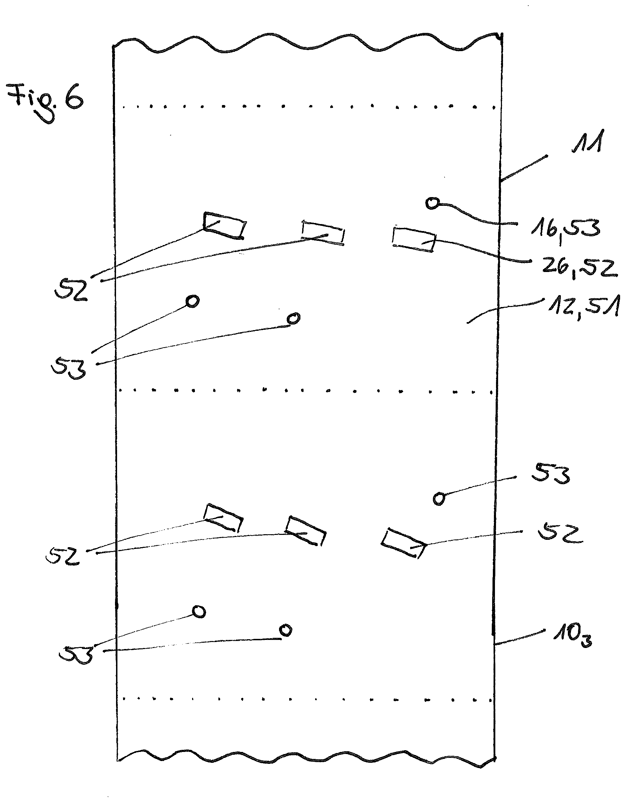

Figure 6 illustrate by means of a principle sketch a further embodiment of a textile fabric web 10₃ according to the present disclosure comprising areas with the yarns 14 being arranged in different weaves, especially to create on the one hand the openings 16 or material accumulations 19 and on the other hand the pattern 24. In most of the part of the textile fabric web 10₃ the yarns can be arranged in twill weave 51. The openings 16 may be created by arrangement of the yarns 14 in mock leno weave 53. The pattern 24 may be created by yarns 14 arranged in plain weave 52. The openings 16 located between two adjacent dotted lines in figure 6 belong to one opening group 18. The pattern 24 between two dotted lines in figure 6 belong to one pattern section 26. The arrangement of yarns 14 between two dotted lines 14 in figure 6 is repeated to form a length of material.

In figure 7, the precut 13 is included to illustrate how the textile fabric web 10₃ according to figure 6 can be cut-out to produce the precuts 13 that can be fastened on a trim part 32.

Figures 3a and 3b show a trim part 32 of or for a vehicle 34 (see Figure 4) by means of a principle sectional view. The trim part 32 comprises a carrier layer 36 on which a precut 13 of a textile fabric web 10 according to the present disclosure is applied. The application may be done by means of a lamination press or an injection molding machine (not shown). At least in the latter case the carrier layer 36 is made of a thermoplastic resin. In this case the textile fabric web 10 comprises a number of material accumulations 19 that can be used as centering means within the injection molding machine or within the lamination tool before the carrier layer 36 is produced. In Figures 3a and 3b the material accumulations 19 protrude over the bottom side, however, it may also be possible that at least some of the material accumulations 19 protrude over the upper side. Of course, instead of material accumulations 19 openings 16 as already described can be used for positioning on respective protrusions. Further, to achieve a similar effect as with using material accumulations 19, positioning devices like pins can be inserted in the openings 16.

An additional pattern layer 38 may be applied on top of the textile fabric web 10 (see figure 3a) or included in the top surface of the textile fabric web 10 (see figure 3b) which may be made by embroidery or quilting, printing, cutting, punching or the like. The pattern layer 38 may be used to further differentiate the appearance of the trim part 32.

Figure 4 shows principle top view of the vehicle 34 which comprises a number of interior trim parts 32 according to the present disclosure. Door panels 40, car seats 42, arm rests 44, headliners 46 and dashboards 48 are named as non-exhaustive examples of such interior trim parts 32.

### Reference list

- 10: textile fabric web
- 10₁: textile fabric web
- 10₂: textile fabric web
- 10₃: textile fabric web
- 11: section
- 12: fabric structure
- 13: precut
- 14: yarn
- 16: opening
- 18: opening group
- 19: pin
- 20: array
- 22: fiber
- 24: pattern
- 26: pattern section
- 28: upper edge
- 30: lower edge
- 32: trim part
- 33: protrusion
- 34: vehicle
- 36: carrier layer
- 38: pattern layer
- 40: door panel
- 42: car seat
- 44: arm rest
- 46: headliner
- 48: dashboard
- 51: twill weave
- 52: plain weave
- 53: mock leno weave
- D: diameter
- S: spacing

## Claims

1. Textile fabric web (10) comprising
- a knitted or woven or braided fabric structure (12), and
- a plurality of openings (16) or material accumulations (19) integrated into the fabric structure (12) and positioned in repeating spacing (S).

2. Textile fabric web (10) according to claim 1, **characterized in that** a number of the openings (16) or material accumulations (19) define one opening group (18) in which the openings (16) or material accumulations (19) are arranged in a particular array (20), a plurality of opening groups (18) positioned in repeating spacing (S) relative to each other.

3. Textile fabric web (10) according to claim 2, **characterized in that** the fabric structure (12) forms a pattern (24) that is repeated in pattern sections (26), the pattern sections (26) being arranged spaced apart from each other, wherein the opening groups (18) are arranged in the same way within the pattern sections (26).

4. Textile fabric web (10) according to claim 3, **characterized in that** the pattern (24) is irregular within a given pattern section(26).

5. Textile fabric web (10) according to one of the preceding claims,
**characterized in that** the fabric structure (12) is woven and can comprise areas with yarns (14) being arranged in at least one of twill weave (51), plain weave (52) and mock leno weave (53).

6. Textile fabric web (10) according to one of the preceding claims,
**characterized in that** the openings (16) or material accumulations (19) are created by arrangement of yarns (14) in at least one of twill weave (51), plain weave (52) and mock leno weave (53).

7. Textile fabric web (10) according to one of the preceding claims,
**characterized in that** the openings (16) or material accumulations (19) have a circular diameter of between 0,5 mm to 5 mm, preferably of between 1,5 mm to 3 mm.

8. Textile fabric web (10) according to one of the preceding claims,
**characterized in that** the textile fabric web (10) comprises functionalized fibers (22), in particular at least one of light guide fibers (22), electrically conductive fibers (22), and thermally conductive fibers (22).

9. Method for producing a textile fabric web (10) according to one of the preceding claims, comprising the step of
- knitting or weaving or braiding
o the fabric structure (12), and
o the plurality of openings (16) or material accumulations (19) integrated into the fabric structure (12) and positioned in repeating spacing (S).

10. Use of the openings (16) or material accumulations (19) as positioning means of a pattern section (26) of a textile fabric web (10) according to one of the claims 3 to 8 for positioning the textile fabric web (10) on a trim part (32) of a vehicle (34).

11. Trim part (32) of a vehicle (34), comprising
- a carrier layer (36) and
- a textile fabric web (10) according to one of the claims 1 to 8 fastened on the carrier layer (36) using the openings (16) or material accumulations (19).

12. Trim part (32) according to claim 11,
**characterized in that** a soft layer is arranged between the carrier layer (36) and the textile fabric web (10).

13. Vehicle (34) comprising a trim part (32) according to claim 11 or 12.
